# EUROPEAN PATENT APPLICATION

(11) **EP 2 746 817 A1**
(43) Date of publication of application: **25.06.2014**
(21) Application number: 12382516.8
(22) Date of filing: 20.12.2012
(51) Int. Cl.: G01T 1/24

(54) **Readout circuits for multi-channel photomultiplier arrays**

(71) Applicant: Universitat de Barcelona, 08028 Barcelona (ES); Centro De Investigaciones Energeticas, Medioambientales y Tecnológicas (CIEMAT), 28040 Madrid (ES)
(72) Inventor: Gascon Fora, David, 08028 Barcelona (ES); Comerma Montells, Albert, 08028 Barcelona (ES); Freixas Coromina, Lluís, 28040 Madrid (ES)

(57) **Abstract**

A readout circuit for multi-channel photomultiplier arrays, such as SiPM arrays, is proposed. It comprises a current mode input stage (15) with distinct gain paths. The current mode input stage (15) comprises a dual loop feedback circuit (40, 50). The first feedback is a high frequency loop feedback (40) and the second is a low frequency feedback circuit (50). The resulting readout circuit is a wideband readout circuit with improved resolution of timing and energy measurements. Furthermore, a dedicated pile-up measurement path (300) allows independent detection of pile-up readings.

## Description

The present invention relates to measurement of radiation and more particularly to readout circuits for multi-channel photomultiplier arrays.

### BACKGROUND ART

Many circuits are known in the art for reading ultra sensitive photosensors such as photomultiplier tubes (PMT) or silicon photomultipliers (SiPM). To fully exploit the performance of PMTs or SiPM the following characteristics are desirable: high-speed and low input impedance, high sensitivity and wide dynamic range (which require a low noise level) and low voltage operation (required for integrated circuit implementations). These characteristics are achieved with readout circuits working in current mode. In recent years, with the advent of solid-state photomultipliers (SiPM, MPPC, GAPDs, etc.) the interest in current mode circuits has increased especially for low voltage and high speed applications.

Traditionally charge sensitive preamplifiers (CSP) based on VFAs (Voltage Feedback Amplifiers) have been used as front end circuits for the read out of radiation detectors of many types (such as semiconductors, photosensors, gaseous, etc). However, those CSPs are quite limited in speed and hence not optimal to achieve good timing resolution or to minimize the effect of pile-up.

For this reason, in many applications the current pulse generated by a PMT or a SiPM is converted to voltage by a small resistor and then read out by a voltage preamplifier. Although this configuration may work in some applications it may not be optimal in terms of noise since this resistor imposes a trade-off between noise and BW. Closed loop (based on VFAs) transimpedance amplifier has better signal to noise ratio (SNR), however its bandwidth is typically limited by stability issues and its dynamic range by the one of the closed loop amplifier.

A better solution is to perform current mode readout with a low input impedance stage, typically with a common gate or common base. Following that stage, the signal is processed inside a chip. This solution offers several advantages:
- Low noise and high speed may be simultaneously achieved.
- Low input impedance may be useful to improve the time resolution, especially for SiPM because of its large capacitance, and may help to minimize crosstalk and interference issues.
- It may help preserve a good dynamic range even for very deep submicron technologies where supply voltage is limited to 1 or 2 V.

Similar current mode circuits are used in high energy physics (HEP) on big colliders, on medical imaging and on optical communications (for photodiode (PD) or avalanche PD (APD) readout).

Furthermore, some medical applications like computer tomography and optical communications require a wide dynamic range.

Another issue is that both in HEP, astrophysics and in medical imaging, precise time measurements with resolutions below 100 ps are often required, especially for Time-of-Flight (TOF) techniques.

It has long been recognized that by accurately measuring the difference in arrival times of the 511 keV photons coming from positron annihilation, the statistical noise in PET (Positron Emission Tomography) can be reduced.

The timing signal is usually obtained after discrimination of the input signal, thus it is the jitter of the discriminated signal what limits the timing resolution of the electronics. The random jitter (σt) (noise correlated) is proportional to the noise (σn) and inversely proportional to the signal slope dS/dt, hence inversely proportional to the signal BW.

Therefore both the signal to noise ratio and the bandwidth have to be optimized in order to achieve the minimum time resolution. Current mode circuits can be useful to achieve this:
- As discussed above, current mode circuits typically have higher BW, because all signal nodes are low impedance nodes.
- In the case of SiPM, the peak current increases by decreasing the input impedance of the preamplifier. This improves the dS/dt term. However, this trend limits the dynamic range for typical current mode circuits. There are two typical approaches:
   (i) Allow saturation of the preamplifier and perform the energy measurement using a Time-over-Threshold (ToT) technique.
   (ii) Create a double path, one for timing measurement and the other one, with lower gain, for energy measurement. However, dynamic range limitations are still present for this type of current mode solutions at the very front end stage, also referred to as "input stage".

The input stage of a readout circuit may be a current mirror, simple current mirror or cascade current mirror, with several output branches.

The input impedance Ri of the mirror can be too high for some applications. In particular, in the case of SiPM array readout, which is a photodiode array with large parasitic capacitance Cpar between 10 and 300 pF, the following problems may be encountered:
(i) Low BW, as BW is proportional to the inverse of Ri*Cpar: this is a problem for timing applications.
(ii) Input impedance Ri variation with input signal. Input impedance is proportional to the inverse of input transistor transconductance gm, i.e. to the input current because gm is proportional to input current. This leads to non-linearity problem when the impedance of the SiPM (1/sCp) is comparable to Ri. Non-linearity leads to poorer energy resolution since gm suffers from process variations (tolerances) and temperature effects.

Furthermore it is often required to be able to control the voltage at the input terminal of a read-out circuit of SiPM arrays. This is required to control the operation point (reverse bias voltage) of every single SiPM of the array.

It would be desirable to provide a readout circuit for a photomultiplier array where at least some of the aforementioned problems are partially resolved.

### SUMMARY OF THE INVENTION

The terms "base", "collector", and "emitter" are typically used to describe the terminals of a bipolar junction transistor. Accordingly, the terms "gate", "source", and "drain" are typically used to describe the terminals of a field-effect transistor. For the purposes of this disclosure the terminal terms may be used interchangeably without implying the type of amplifier used unless explicitly stated.

In a first aspect of the invention a readout circuit for a photomultiplier array is proposed. The photomultiplier array may have at least one photodiode and the readout circuit may have a channel circuit coupled to the at least one photodiode. The channel circuit may comprise a first resistor, coupled at one end to the anode of the at least one photodiode, and an input stage, coupled to the other end of the first resistor. The input stage may comprise a current mirror configuration having at least a first gain path. The first gain path may have an input branch with at least one input amplifier and a first output branch with at least one mirror amplifier. The mirror amplifier may have its base and emitter connected to the base and emitter of the input amplifier of the input branch. The input stage may further comprise a high frequency feedback circuit arranged between the base of the input amplifier and the input of the current mirror configuration.

The HF loop circuit acts as a shunt feedback. It introduces negative feedback to stabilize voltage at the input of the input stage.

In some embodiments, the high frequency feedback circuit may comprise at least a first amplifier and a second amplifier. The first amplifier may have a collector coupled to a power supply voltage, a base coupled to a collector of the second amplifier and an emitter coupled to the base of the input amplifier and to earth via a current source. The second amplifier may have a base coupled to earth via a first capacitor and an emitter coupled to the input of the current mirror configuration.

In some embodiments, the readout circuit may further comprise a servocontroller having a first end coupled to the base of the first amplifier and a second end coupled to the power supply voltage.

In some embodiments, the readout circuit may further comprise a low frequency feedback circuit coupled between the base of the second amplifier and the input of the input branch. The second feedback is added to control the DC and LF value of the voltage at the input of the input stage.

In some embodiments, the low frequency feedback circuit may comprise an Operational Transconductance Amplifier (OTA) having a positive input coupled to a voltage supply reference, a negative input coupled to the emitter of the second amplifier and an output coupled to the base of the second amplifier.

In some embodiments the output branch of the first gain path may further comprise a, a third amplifier, a fourth amplifier and a saturation control circuit. The third amplifier may have a collector and a base coupled to the output of the mirror amplifier and an emitter coupled to the power supply voltage. The fourth amplifier may have a base coupled to the base of the third amplifier and an emitter coupled to the power supply voltage. The saturation control circuit may be coupled between the power supply voltage and the base of the third and fourth amplifiers. The collector of the fourth amplifier may be an output of the first gain path.

In some embodiments the readout circuit may further comprise a time measurement unit coupled to an output of the first gain path for receiving a first current signal and generating a time measurement signal. The time measurement unit may comprise a fast current discriminator for generating the time measurement signal. The fast current discriminator may have a first input for receiving the first current signal and a second input for receiving a time threshold value.

In some embodiments the current mirror configuration may further comprise a second gain path having a second output branch for generating a second current signal. The readout circuit may further comprise an energy measurement unit coupled to an output of the second output branch for receiving the second current signal and generating an energy measurement signal. The energy measuring unit may comprise a first part in series with a second part. The first part may comprise a tunable filter coupled to a tunable integrator block. The second part may comprise a hysteresis comparator coupled to a first TDC.

In some embodiments the current mirror configuration may further comprise a third gain path having a third output branch for generating a third current signal. The readout circuit may further comprise a pile-up measurement unit coupled to an output of the third output branch for receiving the third current signal and generating a pile-up measurement signal. The pile-up measurement unit may comprise a tunable filter for receiving the third current signal coupled to a fast current discriminator for generating a pile-up detection signal. The fast current discriminator may have a first input coupled to an output of the tunable filter and a second input for receiving a pile-up threshold value.

In some embodiments the readout circuit may further comprise a plurality of channel circuits, each coupled to a photodiode of the photomultiplier array, respectively. The photodiodes may be arranged in a common cathode configuration. Each channel circuit may further comprise means for connecting to a logic unit. Each means for connecting may have at least three outputs. A first output may carry a time measurement signal and may be coupled to a fast OR operator module. The fast OR operator module may be coupled to a second TDC and the second TDC may be coupled to a trigger and timing module of the logic unit. A second output may carry an energy measurement signal and may be coupled to an Energy & Position Computation module. A third output may carry a pile-up measurement signal and may be coupled to a Pile-up register module. Each channel circuit may further comprise means for connecting to a Bias and Thresholds module of the logic unit for providing each channel circuit with all Reference Voltages and Threshold Values.

In some embodiments each gain path of the readout circuit may comprise a plurality of amplifiers in a cascode configuration. In this case, the input amplifier may be a cascode amplifier of the input branch. In other embodiments, when no cascode configuration is present, the input amplifier may be a diode connected amplifier. Some of the amplifiers may be bipolar junction transistors and some field effect transistors.

Additional objects, advantages and features of embodiments of the invention will become apparent to those skilled in the art upon examination of the description, or may be learned by practice of the invention.

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### BRIEF DESCRIPTION OF THE DRAWINGS

Particular embodiments of the present invention will be described in the following by way of non-limiting examples, with reference to the appended drawings, in which:
FIG 1 is a block diagram of a readout circuit coupled to a photodiode according to an embodiment.
FIG 2 shows a circuit level diagram of a detail of a readout circuit for a photomultiplier array according to an embodiment.
FIG 3 shows a circuit level diagram of a readout circuit for a photomultiplier array according to an embodiment.

### DETAILED DESCRIPTION OF EMBODIMENTS

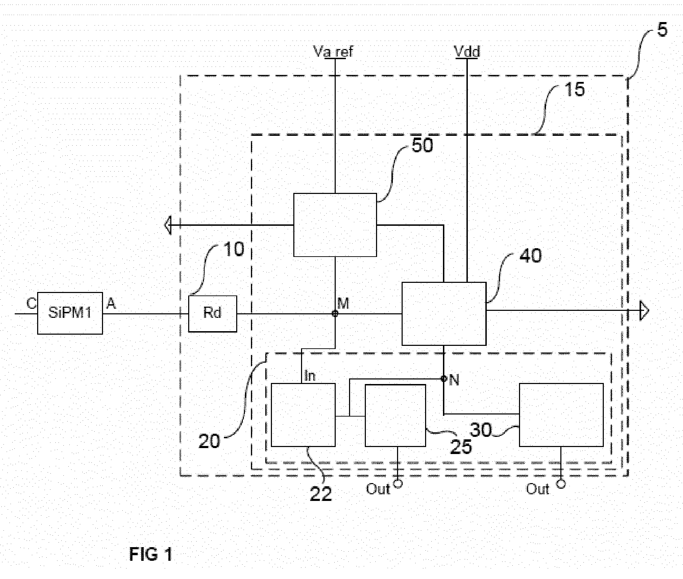

FIG 1 is a block diagram of a detail of a readout circuit according to an embodiment. Readout circuit 5 comprises resistor Rd and input stage 15. Resistor Rd is coupled at one end to the anode A of photodiode SiPM1. SiPM1 may be a photodiode having an anode A and a cathode C. The other end of resistor Rd is coupled, at node M, to the input In of current mirror circuit 20 of input stage 15. Current mirror circuit 20 shown in FIG 1 comprises input branch 22, first output branch 25 and second output branch 30. An input of input branch 22 is the input of current mirror circuit 20. Input branch 22 and first output branch 25 constitute a first gain path, having a first output Out. Accordingly, input branch 22 and second output branch 30 constitute a second gain path, having a second output Out. Input branch 22 comprises at least an input amplifier and each of the output branches comprises at least a mirror amplifier. However, any number of gain paths is possible with this configuration. Current mirror circuit 20 may be either a simple current mirror or a cascode current mirror. A current mirror is a circuit having multiple transistors connected in parallel, with their gates connected together and their sources connected to the same voltage.

Input stage 15 further comprises high frequency (HF) feedback loop circuit 40. A first end of HF loop circuit 40 is coupled, at node N, to the base of the input amplifier of input branch 22. A second end of HF loop circuit 40 is coupled to the input of input branch 22. A third end of HF loop circuit 40 is coupled to power voltage source Vdd and a fourth end of HF loop circuit 40 is coupled to ground. Input stage 15 further comprises low frequency (LF) loop circuit 50. A first end of LF loop circuit 50 is coupled to a fifth end of HF loop circuit 40. A second end of LF loop circuit 50 is coupled to the input of current mirror circuit 20. A third end of LF loop circuit 50 is coupled to a voltage supply reference Va_ref and a fourth end of LF loop circuit 50 is coupled to ground.

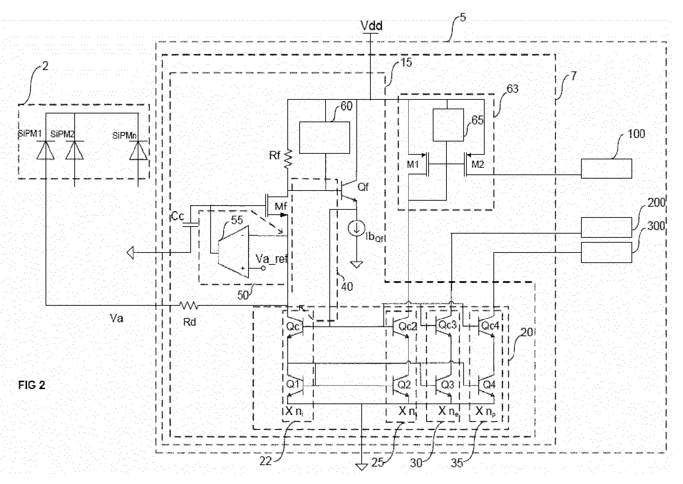

FIG 2 shows a circuit level diagram of a detail of a readout circuit for a photomultiplier array according to an embodiment. Readout circuit 5 comprises channel circuit 7. The anode of photodiode SiPM1 is coupled, via resistor Rd, to an input of current mirror circuit 20 of input stage 15 of channel circuit 7 of readout circuit 5. Input stage 15 comprises cascode current mirror circuit 20 having input branch 22 and three output branches 25, 30, 35 (thus constituting three gain paths), a HF loop circuit 40, a LF loop circuit 50 and saturation control arrangement 63.

The anode of photodiode SiPM1 is coupled to first end of resistor Rd. The other end of resistor Rd is coupled to an input of cascode current mirror circuit 20. In FIG 2, current mirror circuit 20 is a current amplifier implemented with Bipolar Junction Transistors (BJTs) and more specifically with Heterojunction Bipolar Transistors (HBTs). However, FETs could be used according to the requirements of a specific application.

Transistors Q1 and Qc1 form the input branch of the three gain paths. Q2 with Qc2, Q3 with Qc3 and Q4 with Qc4 form the first, second and third output branches, respectively. The first gain path comprises a cascode current mirror implemented with npn bipolar transistors Q1 and Q2 each in series with Qc1 and Qc2, respectively. The second gain path comprises a cascode current mirror implemented with npn bipolar transistors Q1 and Q3 each in series with Qc1 and Qc3, respectively. Accordingly, the third gain path comprises a cascode current mirror implemented with npn bipolar transistors Q1 and Q4 each in series with Qc1 and Qc4, respectively. The other end of resistor Rd is coupled to Collector of Qc1. Emitter of Qc1 is coupled to Collector and Base of Q1 and to Base of Q2. Base of Qc1 is coupled to base of Qc2. Emitter of Qc2 is coupled to Collector of Q2. Finally, Emitters of Q1 and Q2 are connected to ground.

HF loop circuit 40 is formed by amplifiers Qc1, Mf and Qf. LF loop circuit 50 is formed by OTA 55 and amplifier Mf. In the HF loop circuit, emitter of amplifier Mf is coupled to other end of resistor Rd. Collector of amplifier Mf is coupled to base of transistor Qf, to one end of Servocontrol 60 and to one end of resistor Rf. Emitter of transistor Qf is coupled to the base of Qc1 and to earth via current source IbQf. Collector of transistor Qf, the other end of resistor Rf and the other end of Servocontrol 60 are coupled to Vdd.

Servocontrol 60 is used because process variations (specially of Rf) may cause large uncertainties on the operating point of HF loop circuit and more particularly on the quiescent current on Mf. Therefore, a replica of the input stage may be used to monitor this current. The monitored current is compared with a reference current, obtaining an error signal. A negative feedback loop controls a current source in each channel to minimize this error signal. The replica to monitor the current may be a common block for all the channels.

LF loop circuit 60 is formed by OTA 55 and amplifier Mf. The other end of resistor Rd is further coupled to the negative input of high gain OTA 55. The positive input of OTA 55 is coupled to reference voltage Va_ref. The output of OTA 55 is coupled to earth via Capacitor Cc and to base of amplifier Mf.

The HF loop circuit acts as a shunt feedback via transistor Mf. It introduces negative feedback to stabilize voltage at Va node. Of particular importance is the introduction of transistor Qf that acts as a voltage follower to increase the voltage range of Va. This is of importance especially in cases where the ability to modify Va with 1 V range is required. Such functionality is enabled with the introduction of transistor Qf in the HF loop circuit.

The second feedback, the LF loop circuit, is added to control the DC and LF value of Va. Transistor Mf is part both of the HF and LF loop circuits. Transistor Mf is a common base amplifier that senses voltage variations in Va, those variations are converted to a current signal. The current signal is converted to voltage with resistor Rf. The small signal voltage variation is transmitted by transistor Qf emitter follower to the base of the cascode transistor of the current mirror. Transistor Mf acts as a common emitter amplifier that closes the negative feedback loop.

LF loop circuit is a negative feedback loop via a high gain and low BW OTA 55. It may allow accurate control of Va voltage at DC/LF. Feedback loop of LF loop circuit 50 is closed by transistor Mf. This virtual short circuit makes Va approximately equal to Va_ref. Va_ref may be set accurately (by a stable voltage reference and programmed by a DAC), hence Va may be known and well controlled.

A first effect of this feedback on the input stage is that voltage at Va node may be accurately controlled. Without the LF loop circuit, the voltage at node Va would be the voltage at Mf gate minus the Vgs voltage of Mf. Voltage Vgs of Mf may change a lot with temperature and process variations and also may depend on the circuit operating point.

A second effect of this feedback may be seen at the final output. In a SiPM array it is important to control the voltage of each SiPM anode (Va) since, typically, cathode is common (Vc) for all. Therefore, it is very important to control the Vc-Va=Vca voltage since operating parameters of the SiPM such as gain or photodetection efficiency depend on the overvoltage Vov, where Vov=Vca-Vb, and Vb is the breakdown voltage of the SiPM. Vb is a parameter with significant tolerances, i.e. it changes from element to element of the array (from SiPM to SiPM). As a result, adjusting the Vca allows equalization of Vov for all the SiPMS. This translates in more uniform response which in turn provides better resolution.

The Collector of Qc2 is coupled to High Gain Unit 63. High Gain Unit 63 comprises a current mirror circuit with pnp transistors M1 and M2 and Saturation Control Circuit 65. Collector of Qc2 is coupled to Base of M1 and M2, to Collector of M1 and to one end of Saturation Control Circuit 65. Emitter of M1, emitter of M2 and second end of SCC 65 are coupled to Vdd. Collector of M2 may be coupled to Time Measurement Unit 100.

Second gain path 30 comprises npn cascode transistors Qc3 and Q3. Emitter of Qc3 is coupled to Collector of Q3. Base of Qc3 is couple to base of Qc1. Base of Q3 is coupled to Base of Q1, Q2 and to Emitter of Qc1. Emitter of Q3 is coupled to ground. Collector of Qc3 is coupled to Energy Measurement Unit 200.

The third gain path comprises npn cascode transistors Qc4 and Q4. Emitter of Qc4 is coupled to Collector of Q4. Base of Qc4 is couple to base of Qc1. Base of Q4 is coupled to Base of Q1, Q2 and Q3 and to Emitter of Qc1. Emitter of Q4 is coupled to ground. Collector of Qc4 is coupled to Pile-Up Measurement Unit 300.

The dual feedback loop decreases the input impedance. A first effect of this is that it increases the bandwidth for all outputs of the input stage. A second effect is that it improves linearity for all outputs of the input stage. This is particularly important for energy measurements. As a consequence, time and energy measurement resolution is improved at the final outputs of the channel circuit.

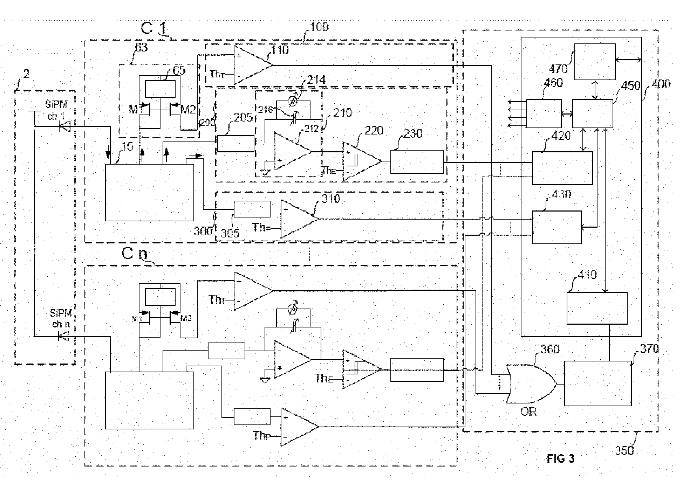

FIG 3 shows a circuit level diagram of a readout circuit for a photomultiplier array according to an embodiment.

SiPM array 2 comprises n SiPM photodiodes. The anode of each SiPM diode is read by each channel circuit C1 to Cn. The elements of C1 are identical to the elements of all channels C1 to Cn. The anode of photodiode SiPM1 is coupled to input stage 15 of channel circuit C1. Input stage 15 may be similar to input stage 15 of FIG 2. Input stage 20 comprises a current mirror circuit for generating three gain paths.

The output of the first gain path is coupled to High Gain Unit 63. High Gain Unit 63 is similar to high gain unit 63 of FIG 2. It comprises a current mirror circuit with pnp transistors M1 and M2 and Saturation Control Circuit 65. The output of high gain unit 63 is coupled to time measurement unit (TMU) 100. The output of the second gain path is coupled to Energy Unit (EU) 200. The output of third gain path is coupled to Pile-up Measurement Unit (PMU) 300.

TMU 100 comprises Fast Current Discriminator 110. Fast Current Discriminator 110 receives a current signal from high gain unit 63 and compares it with threshold value ThT. The output of Fast Current Discriminator 110 is input to Fast OR gate 360 of Output Stage 350.

EU 200 comprises Tunable Filter 205 and a Time over Threshold Circuit (ToT) connected in series. ToT comprises Integrator block 210, Hysteresis comparator 220 and TDC 230 connected in series. Tunable Filter 205 shapes the signal to make it narrower. Tunable filter 205 is a high pass filter differentiator, providing a short pulse and, thus, avoiding pile-up effects between 2 consecutive pulses. It includes a tunable pole-zero compensation to remove the undershoot caused by the differentiation of the long tail of the input pulse. As this tail depends a lot on the scintillator, Tunable Filter 205 needs to be tunable to be able to work with different scintillators. Integrator block 210 includes Amplifier 212 with negative feedback including Tunable Current Source 213 and Tunable Capacitor 216 in parallel. Integrator block 210 integrates the signal. It is discharged by a constant current, so the duration of the integrator output is proportional to the input signal charge which, in turn, is proportional to the light and therefore the energy deposited in the scintillator or in other detector. The feedback is tunable to allow adjusting of the gain and of the slope of the discharge which, in turn, allows scaling of the conversion time. The output of Integrator block 210 is coupled to Hysteresis comparator 220 and the output of Hysteresis comparator 220 to TDC 230. Hysteresis comparator 220 is used to encode this energy or charge information in the duration of a pulse. It has hysteresis because of the slow discharge.

This type of signal processing is known as Time Over Threshold. Tunable filter 205 and integrator block 210 are dedicated in order to achieve a linear response. Linear response is required to improve energy measurement resolution.

Different elements of the energy measurement unit may be tuned to adapt to different applications or to different scintillators, where different SiPM gain, pulse rate and energy resolution are expected. Furthermore, tunability may compensate for process variations of the components.

First TDC 230 is a time-to-digital converter (TDC) that may be implemented with only digital electronics such as FPGA. As a result, no Analog Digital Converter is necessary. This could lower power consumption to as low as 1 mW for each TDC employed, as ADCs consume much more power than TDCs.

PMU 300 comprises Tunable Filter 305 and Fast Current Discriminator 310 in series. Tunable Filter 305, similarly to Tunable Filter 205, shapes the signal to make it narrower and it is tunable so that it may be used to account for different scintillator characteristics. Fast current discriminator 310 detects if more than one pulse is present in a single channel. If it is the case a flag bit is set to 1 (per channel).

Each of the outputs of TMU 100, EU 200 and PMU 300 is input to Output Stage 350. Output Stage 350 comprises Fast OR Gate 360, second TDC 370 and Logic Unit 400. Fast OR Gate 360 comprises at least n inputs and one output. Fast OR Gate 360 receives each output signal from each TMU of Channels 1 to n at its n inputs, respectively. Its output is 1 when at least one of the n Fast Current Discriminators of the TMUs indicates that a signal has been detected above ThT. It is coupled in series with second TDC 370. The output of second TDC 370 is a digital indication of a detected impact event. This information is input to Trigger& Timing Module 410 of Logic Unit 400. Trigger& Timing Module 410 measures the leading edge timing with respect to a reference system clock and triggers Control Module 450 to instruct Energy & Position Computation Module 420 to start conversion. Control Module 450 receives signals and gives instructions to all Modules of Logic Unit 400. Energy & Position Computation Module 420 comprises n inputs that receive the n outputs of the n EUs, respectively, and a communication interface with Control Module 450. Pile-Up Register Module 430 receives n signals from the n PMUs at n inputs, respectively. Each bit in Pile-Up Register Module 430 corresponds to more than one hit in a channel. Logic Unit 400 further comprises Bias and Thresholds Module 460 that provides all bias voltages and thresholds to Channels 1 to n. Finally, Logic Unit 400 comprises Serial Interface 470 that communicates with a computer to read/write control registers of the system (such as thresholds, currents and capacitance settings, etc) and to send the output data to peripherals and monitors.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A readout circuit for a photomultiplier array, the photomultiplier array having at least one photodiode, the readout circuit having a channel circuit coupled to the at least one photodiode, the channel circuit comprising:
a first resistor, coupled at one end to the anode of the at least one photodiode, and
an input stage, coupled to the other end of the first resistor, the input stage comprising:
a current mirror configuration having at least a first gain path, the first gain path having
an input branch with at least one input amplifier and
a first output branch with at least one mirror amplifier having its base and emitter connected to the base and emitter of the input amplifier of the input branch; and
a high frequency feedback circuit arranged between the base of the input amplifier and the input of the current mirror configuration.

2. The readout circuit according to claim 1, wherein the high frequency feedback circuit comprises at least a first amplifier and a second amplifier,
the first amplifier having a collector coupled to a power supply voltage, a base coupled to a collector of the second amplifier and an emitter coupled to the base of the input amplifier and to earth via a current source,
the second amplifier having a base coupled to earth via a first capacitor and an emitter coupled to the input of the current mirror configuration.

3. The readout circuit according to claim 2, further comprising a servocontroller having a first end coupled to the base of the first amplifier and a second end coupled to the power supply voltage.

4. The readout circuit according to claim 3, further comprising a second resistor coupled between the collector of the second amplifier and the power supply voltage.

5. The readout circuit according to any of claims 2 to 4, further comprising a low frequency feedback circuit coupled between the base of the second amplifier and the input of the input branch.

6. The readout circuit according to claim 5, wherein the low frequency feedback circuit comprises an Operational Transconductance Amplifier (OTA) having a positive input coupled to a voltage supply reference, a negative input coupled to the input of the input branch and an output coupled to the base of the second amplifier.

7. The readout circuit according to any of claims 2 to 6, wherein output branch of the first gain path further comprises a third amplifier, a fourth amplifier and a saturation control circuit, wherein
the third amplifier has a collector and a base coupled to the output of the mirror amplifier and an emitter coupled to the power supply voltage,
the fourth amplifier has a base coupled to the base of the third amplifier and an emitter coupled to the power supply voltage, and
the saturation control circuit is coupled between the power supply voltage and the base of the third and fourth amplifiers,
wherein the collector of the fourth amplifier is an output of the first gain path.

8. The readout circuit according to any of claims 1 to 7, further comprising:
a time measuring unit coupled to an output of the first gain path for receiving a first current signal and generating a time measurement signal,
wherein the time measuring unit comprises a fast current discriminator for generating the time measurement signal, the fast current discriminator having a first input for receiving the first current signal and a second input for receiving a time threshold value.

9. The readout circuit according to any of claims 1 to 8, wherein
the current mirror configuration further comprises a second gain path having a second output branch for generating a second current signal and
the readout circuit further comprises an energy measurement unit, coupled to an output of the second output branch, for receiving the second current signal and generating an energy measurement signal.

10. The readout circuit according to claim 9, wherein the energy measuring unit comprises a first part in series with a second part, wherein the first part comprises a tunable filter coupled to a tunable integrator block, and the second part comprises a hysteresis comparator coupled to a first TDC.

11. The readout circuit according to any of claims 1 to 10, the current mirror configuration further comprises a third gain path having a third output branch for generating a third current signal and
the readout circuit further comprises a pile-up measurement unit, coupled to an output of the third output branch, for receiving the third current signal and generating a pile-up measurement signal.

12. The readout circuit according to claim 11, the pile-up measurement unit comprising a tunable filter for receiving the third current signal coupled to a fast current discriminator for generating a pile-up detection signal,
wherein the fast current discriminator has a first input coupled to an output of the tunable filter and a second input for receiving a pile-up threshold value.

13. The readout circuit according to any of claims 1 to 12, further comprising a plurality of channel circuits, each coupled to a photodiode of the photomultiplier array, respectively, the photodiodes arranged in a common cathode configuration.

14. The readout circuit according to claim 13, each channel circuit further comprising means for connecting to a logic unit,
each means for connecting having at least three outputs, wherein
a first output carries a time measurement signal and is coupled to a fast OR operator module, the fast OR operator module being coupled to a second TDC and the second TDC being coupled to a trigger and timing module of the logic unit;
a second output carries an energy measurement signal and is coupled to an Energy & Position Computation module; and
a third output carries a pile-up measurement signal and is coupled to a Pile-up register module.

15. The readout circuit according to any of the previous claims wherein each gain path comprises a plurality of amplifiers in a cascode configuration.
